# EUROPÄISCHE PATENTSCHRIFT

(11) **EP 2 177 089 B1**
(45) Veröffentlichungstag und Bekanntmachung des Hinweises auf die Patenterteilung: **26.10.2011**
(21) Anmeldenummer: 08801547.4
(22) Anmeldetag: 08.08.2008
(51) Int. Cl.: H05B 37/02

(54) **DIMMEN VON LEUCHTMITTEL-BETRIEBSGERÄTEN AUF VORAB DEFINIERTE PEGEL**
DIMMING OF LIGHTING CONTROL DEVICES TO A PREDEFINED LEVEL
VARIATION D'APPAREILS DE COMMANDE D'ÉLÉMENTS LUMINEUX À UN NIVEAU DÉFINI AU PRÉALABLE

(30) Priorität: 08.08.2007 DE 102007037318; 09.10.2007 DE 102007048341
(43) Veröffentlichungstag der Anmeldung: 21.04.2010
(73) Patentinhaber: Tridonic GmbH & Co KG, 6851 Dornbirn (AT)
(72) Erfinder: SANDHOLZER, Markus, A-6844 Altach (AT); MAIER, Joachim, A-6840 Götzis (AT)
(74) Vertreter: Rupp, Christian
(86) Internationale Anmeldenummer: PCT/EP2008/006569
(87) Internationale Veröffentlichungsnummer: WO 2009/019037

(56) Entgegenhaltungen:
- EP-A- 1 725 081
- WO-A-2007/035203
- WO-A-2008/084901
- DE-U1- 29 724 657
- US-A1- 2007 029 949
- US-A1- 2007 114 947

## Beschreibung

Die vorliegende Erfindung bezieht sich allgemein auf Verfahren und Geräte, mittels denen Leuchtmittel, wie beispielsweise LEDs, Gasentladungslampen, Hochdrucklampen etc. auf vorab definierte Dimmpegel (Dimmstufen) gesteuert und/oder geregelt werden können.

Im Bereich von Gasentladungslampen werden derartige elektronische Betriebsgeräte allgemein elektronisches Vorschaltgerät (EVG) genannt.

Es ist aus dem Stand der Technik bekannt, beispielsweise derartige elektronische Vorschaltgeräte (EVGs), um nur ein Beispiel für Leuchtmittelbetriebsgeräte zu nennen, über einen Digitalbus anzusteuern. Es wird diesbezüglich auf die Literatur im Zusammenhang mit dem sogenannten DALI (Digital Addressable Light Interface)- Standard verwiesen. Dabei werden also einem Leuchtmittelbetriebsgerät an einem Steuereingang digitale Signale zugeführt, die u.a. Dimm-Sollwerte vorgeben können.

Da ein Benutzer nicht immer gewillt ist, zu einem Leuchtmittelbetriebsgerät mit einer derartigen Digitalschnittstelle auch die zugehörige Buseinrichtung einschließlich digitalem Steuergerät (Kontroller) zu verwenden, sind aus dem Stand der Technik auch Betriebsgeräte bekannt, bei denen an einem derartigen digitalen Steuereingang (digitale Schnittstelle) wahlweise eben ein Digitalsignal oder aber auch ein mittels eines mit Netzspannung versorgten Tasters erzeugtes Signal angelegt werden kann. In diesem Fall kann also ein Benutzer, wenn er denn die digitale Peripherie nicht verwinden möchte, den Digitalsteuereingang des Betriebsgeräts mittels Tasterbetätigung ansteuern. Dabei werden bspw. die Zeitdauer sowie die Wiederholrate der Tasterbetätigung durch das angeschlossene Betriebsgerät als Signal zum Ein-/Ausschalten oder zum Dimmen ausgewertet.

Ein Beispiel für ein derartiges Betriebsgerät, an dessen digitalem Steuereingang auch ein von einem mit Netzspannung versorgten Taster oder Schalter herrührendes Signal anlegbar ist, ist beispielsweise in dem deutschen Gebrauchsmuster DE 297 24 657 angeführt.

Aus der WO 2007/035203 A eine Steuerung für LEDs bekannt, die in einer Fluoreszenzleuchtenanordnung, wobei die Anordnung einen Photosensor aufweist.

Aus der US 2007/029949 A1 ist ebenfalls eine Beleuchtungsanordnung mit einem Bewegungsmelder bekannt.

Die vorliegende Erfindung stellt sich nunmehr die Aufgabe, die aus dem Bereich von Taster und Schalter gewonnene Erkenntnis, dass an einem Digital-Steuereingang eines Leuchtmittelbetriebsgeräts bei entsprechender Auslegung auch mittels einer Netzspannung erzeugte Signale angelegt werden können, auf andere Bereiche zu übertragen.

Die Erfindung hat dabei insbesondere erkannt, dass sich ein derartiger Ansatz auch auf den Bereich der Bewegungserkennung mittels eines Bewegungsmelders übertragen läßt.

Die genannte Aufgabe wird genauer gesagt durch die Merkmale der unabhängigen Ansprüche gelöst. Die abhängigen Ansprüche bilden den zentralen Gedanken der Erfindung in besonders vorteilhafter Weise weiter.

Erfindungsgemäß wird also ein Verfahren zur Ansteuerung von elektronisch gesteuerten Leuchtmittelbetriebsgeräten vorgeschlagen. Ein typisches Beispiel für ein derartiges Leuchtmittelbetriebsgerät ist ein elektronisches Vorschaltgerät (EVG) für Gasentladungslampen. Erfindungsgemäß wird ein Ausgangssignal eines mit einer Versorgungsspannung verbundenen Bewegungsmelders ausgewertet. Abhängig von dem Ausgangssignal des Bewegungsmelders wird dann das elektronisch gesteuerte Leuchtmittelbetriebsgerät auf einen von mehreren vorgegebenen Dimmpegel (üblicherweise grösser Null) angesteuert. Dabei wird auch der Zustand einer weiteren Schnittstelle, bspw. das Ausgangssignals eines Lichtsensors, insbesondere eines Tageslichtmesskopfes, ausgewertet, um abhängig davon den Wert von einem oder mehreren dieser Dimmpegel einzustellen.

Dabei kann der Ruhepegel, also der Dimmpegel bei nicht erfasster Bewegung, von dem Ausgangssignal des Lichtsensors abhängen.

Der Ruhepegel kann bei einem geringeren erfassten Lichtwert höher als bei einem höheren erfassten Lichtwert sein.

Der Aktivpegel, also der Dimmpegel bei erfasster Bewegung, kann von dem Ausgangssignal des Lichtsensors abhängen.

Der Aktivpegel kann bei einem geringeren erfassten Lichtwert höher sein als bei einem höheren erfassten Lichtwert.

Der Aktivpegel kann auf Null gesetzt werden, wenn der erfasste Lichtwert über einem vorgegebenen Schwellenwert liegt.

Das Ausgangssignal des Bewegungsmelders kann dabei in einem Steuereingang des Betriebsgeräts erfasst werden, der getrennt von der Spannungsversorgung des Leuchtmittelbetriebsgeräts vorgesehen ist.

Der Steuereingang kann dabei so ausgebildet sein, dass an ihm wahlweise ein Digitalsignal oder ein Netzspannungssignal angelegt werden kann.

Gemäß einem weiteren Aspekt der vorliegenden Erfindung ist ein Verfahren zur Ansteuerung von elektronisch gesteuerten Leuchtmittelbetriebsgeräten vorgesehen, wobei vorab wenigstens zwei unterschiedliche Dimmstufen (Dimmpegel) in einem Leuchtmittelbetriebsgerät vorprogrammiert werden. Abhängig von einem Steuersignal, das dem Leuchtmittelbetriebsgerät zugeführt wird, werden dann selektiv eine der beiden Dimmstufen angesteuert. Beide Dimmstufen geben dabei eine Lichtleistung von mehr als 0% an.

Gemäß einem noch weiteren Aspekt der vorliegenden Erfindung ist ein Verfahren zur Ansteuerung von elektronisch gesteuerten Leuchtmittelbetriebsgeräten vorgesehen, wobei in einem definierten Raum eine Bewegung erfasst wird. Wenn eine Bewegung positiv erfasst wird, wird ausgehend von einem Ruhewert das Leuchtmittelbetriebsgerät auf einen von dem Ruhewert verschiedenen Betriebssollwert angesteuert, wobei der Betriebssollwert einen im Vergleich zum Ruhewert vergrößerte Lichtleistung der angeschlossenen Leuchtmittel angibt.

Der Betriebssollwert kann dabei automatisch während einer definierten Zeitdauer beibehalten werden, bevor wieder der Ruhewert angesteuert wird.

Der Ruhewert und/oder der Betriebssollwert können dabei einstellbar bzw. programmierbar sein.

Der Ruhewert kann dabei auf einen Wert von mehr als 0% Lichtleistung eingestellt werden.

Die Erfindung bezieht sich auch auf ein Computersoftware-Programmprodukt, das ein Verfahren der oben genannten Art unterstützt, wenn es auf einer Recheneinrichtung läuft bzw. wenn es durch Hartverdrahtung implementiert wird.

Die Erfindung bezieht sich auch auf Betriebsmittel für Leuchtmittel, das zur Durchführung eines derartigen Verfahrens ausgelegt ist.

Ein weiterer Aspekt der vorliegenden Erfindung bezieht sich auf Leuchtmittelbetriebsgerät, das einen Steuereingang aufweist. In dem Betriebsgerät sind dabei zwei unterschiedliche Dimmpegel abgelegt, die jeweils größer als 0% sind und auf die ein angeschlossenes Leuchtmittel abhängig von einem an den Steuereingang anliegenden Signal gesteuert und/oder geregelt wird.

Der Steuereingang kann dabei derart ausgelegt sein, dass wahlweise ein digitales Signal mit einem ersten Spannungspegel oder ein von einer Netzspannung herstammendes Signal mit einem davon unterschiedlichen Pegel anlegbar ist. Beide genannten Signalarten können durch das Betriebsgerät ausgewertet und zur Ansteuerung eines angeschlossenen Leuchtmittels umgesetzt werden.

Die Erfindung bezieht sich auch auf ein System zur Ansteuerung von elektronisch gesteuerten Leuchtmittelbetriebsgeräten, wobei das System einen mit einer Versorgungsspannung verbundenen Bewegungsmelder sowie ein Leuchtmittelbetriebsgerät aufweist. Das Leuchtmittelbetriebsgerät weist einen Steuereingang auf, dem ein Ausgangssignal des Bewegungsmelders zuführbar ist. Als Antwort auf eine durch den Bewegungsmelder erfasste Bewegung kann dabei das Leuchtmittelbetriebsgerät ein angeschlossenes Leuchtmittel automatisch auf eine höhere Lichtleistung ansteuern.

Ein noch weiterer Aspekt der vorliegenden Erfindung bezieht sich auf ein System zur Ansteuerung von Leuchtmitteln, das einen Bewegungsmelder sowie ein damit verbundenes Leuchtmittelbetriebsgerät aufweist. Das Leuchtmittelbetriebsgerät steuert ein angeschlossenes Leuchtmittel auf einen von dem Ruhewert verschiedenen Betriebssollwert, wenn von dem Bewegungsmelder eine Bewegung in einem definierten Raum erfasst wird. Der Betriebssollwert liegt dabei höher als ein Ruhewert.

Das Leuchtmittelbetriebsgerät kann insbesondere ein elektronisches Vorschaltgerät (EVG) sein.

Weitere Vorteile, Merkmale und Eigenschaften der vorliegenden Erfindung sollen nunmehr Bezug nehmend auf die einzige Figur der in der Anlage beigefügten Zeichnungen erläutert werden.
- Figur 1: zeigt ein erstes erfindungsgemäßes System zur Ansteuerung eines Leuchtmittels, und
- Figur 2: zeigt ein weiteres Ausführungsbeispiel, bei dem ein Bewegungsmelder mit einem Leuchtmittelbetriebsgerät über einen Digitalbus kommuniziert.

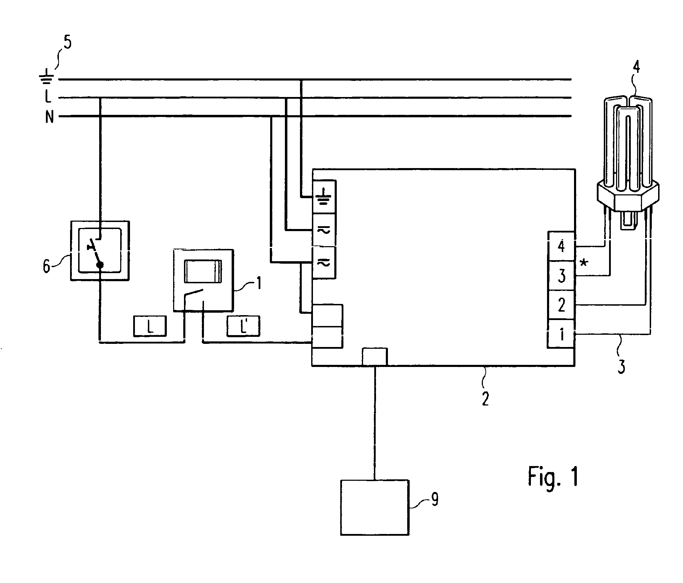

In Figur 1 sind schematisch dargestellt ein grundsätzlich bekannter Bewegungsmelder 1, ein elektronisches Vorschaltgerät (EVG) 2 sowie an dem Ausgang 3 des EVGs zwei angeschlossene Leuchtmittel 4. Es wurde bereits einführend darauf hingewiesen, dass das EVG 2 nur ein Beispiel für ein Betriebsgerät für Leuchtmittel darstellt und sich die vorliegende Erfindung zwanglos auf beliebige andere Leuchtmittel und somit über Gasentladungslampen hinaus anwenden läßt.

Das dargestellte EVG 2 weist drei Anschlüsse PE, L, N auf, die mit der Erde, der Phase sowie dem Nullleiter einer Spannungsversorgung 5 verbindbar sind.

Darüber hinaus weist das dargestellte EVG auch eine Schnittstelle mit zwei Anschlüssen D1, D2 auf. Diese Schnittstelle D1, D2 kann, wie sich bereits durch die Kurzbezeichnung der Anschlüsse ergibt, dazu ausgelegt sein, dass ihr digitales Signale beispielsweise gemäß dem DALI-Standard zugeführt werden, um somit dem EVG 2 Befehle zu übermitteln bzw. um an diesen Anschlüssen von dem EVG 2 aus Befehle an einen angeschlossenen Bus, wie beispielsweise dem DALI-Bus zu übermitteln, wenn eine bidirektionale Kommunikation vorgesehen ist.

Optional können die Anschlüsse D1, D2 auch zur Entgegennahme von Digitalbefehlen mit nachfolgender Signalverarbeitung ausgebildet sein. In diesem Fall sind die Anschlüsse D1, D2 so ausgebildet, dass an sie Signale angelegt werden können, die von einer Versorgungsspannung wie beispielsweise der Netzspannung herstammen und bspw. durch einen Taster oder Schalter moduliert sind. In dem dargestellten Beispiel ist der Anschluß D2 mit dem Nullleiter N der Spannungsversorgung 5 verbunden.

Alternativ können die Anschlüsse D1, D2 auch durch einen Schalter, Taster etc. selektiv kurzgeschlossen werden, um somit Signale einzugeben.

Zwischen dem anderen Signalsteuereingang D1 des EVGs 2 und dem Phasenleiter L der Spannungsversorgung 5 ist ein handelsüblicher Bewegungsmelder 1 geschaltet (die Funktion des ebenfalls dazwischen geschalteten optionalen Timers 6 wird später erläutert werden). Diesem Bewegungsmelder 1 wird also eingangsseitig die Phase L der Versorgungsspannung 5 zugeführt. Das Ausgangssignal des Bewegungsmelders 1, das also dem Steuereingang D1 des EVGs 2 zugeführt wird, wird mit L' bezeichnet.

An dem Steuereingang D1 können also im wesentlichen zwei unterschiedliche Signale anliegen, nämlich eines für den Fall der Erfassung einer Bewegung durch den Bewegungsmelder 1 sowie ein davon unterschiedliches Signal für den Fall, dass der Bewegungsmelder 1 keine Bewegung erkennt.

Dabei muss das Signal nicht direkt von einem Bewegungsmelder kommen, vielmehr kann dieses Signal auch mittelbar von einem Bewegungsmelder ausgelöst werden. Dazu kann bpsw. ein zentral gesteuertes Relais die Erzeugung der Signale übernehmen, wobei das Relais oder eine andere vergleichbare Netzschaltereinheit durch einen Bewegungsmelder angesteuert werden.

Insbesondere können diese beiden Signalzustände, die dem Ausgangssignal des Bewegungsmelders entsprechen, wie folgt definiert sein:
Bei Erfassung einer Bewegung durch den Bewegungsmelder 1 schließt dieser die Verbindung zwischen dem Phasenleiter L und dem Steuereingang D1, so dass an dem Steuereingang D1 der Signalpegel des Phasenleiters L anliegt. In dem EVG 2 ist vorab ein definierter Dimmpegel abgelegt, der durch das EVG 2 angesteuert wird, wenn durch Anliegen des Phasenleiters L an dem Steuereingang D1 das Erkennen einer Bewegung durch den Bewegungsmelder 1 wiedergegeben wird.

Andererseits, wenn der Bewegungsmelder 1 keine Bewegung in den von ihm überwachten Bereich erkennt, ist gemäss diesem Ausführungsbeispiel die Verbindung zwischen dem Steuereingang D1 und dem Phasenleiter L der Spannungsversorgung 5 getrennt, so dass an dem Steuereingang D1 keine Spannung anliegt. Für diesen Fall, der also durch das EVG 2 als Nichterkennen einer Bewegung interpretiert werden kann, kann in dem EVG 2 ein zweiter Dimmwert vorprogrammiert sein, der im folgenden Ruhewert entsprechend der Nichterkennung einer Bewegung bezeichnet werden wird. Dieser Ruhewert kann insbesondere ein im Vergleich zu dem Betriebssollwert im Falle einer Erkennung einer Bewegung niedriger Dimmpegel sein.

Ein typischer Anwendungsfall für ein derartiges System zur Ansteuerung von Leuchtmitteln sind beispielsweise Treppenhäuser oder Flure. In vorteilhafter Weise sind dabei neben dem Leuchtmittelbetriebsgerät und dem Bewegungsmelder keine weiteren Steuereinheiten notwendig.

Wenn durch den Bewegungsmelder 1 eine Bewegung erkannt wird und dadurch beispielsweise die Netzspannung an dem Steuereingang D1 des EVGs 2 anliegt, kann dieses beispielsweise ein angeschlossenes Leuchtmittel automatisch auf 100% Lichtleistung ansteuern. Wenn andererseits keine Bewegung erkannt wird, und somit an dem Steuereingang D1 das Signal '0' anliegt (spannungslos), kann auf einen niedrigeren Wert wie beispielsweise 5% Lichtleistung gesteuert werden.

Wenn also der Bewegungsmelder die Anwesenheit einer Person beispielsweise in einem Treppenhaus erkennt, wird automatisch das Treppenhaus mit einer ausreichenden Lichtleistung, bspw. 100%, beleuchtet.

Auf jeden Fall unterscheidet sich der Ruhepegel (keine Bewegung) von dem Aktivpegel (Bewegung erkannt), wobei der Ruhepegel üblicherweise unter dem Aktivpegel liegt. Es kann indessen auch der Aktivpegel unter dem Ruhepegel liegen.

Nach einer vorbestimmten Zeitdauer, die beispielsweise in dem EVG 2 programmiert oder eingestellt sein kann, oder aber der (wiederum ggf. Einstellbaren) Verzögerungszeit des Bewegungsmelders 1 nach Erkennung einer Bewegung entspricht, unterbricht der Bewegungsmelder wieder die Verbindung mit der Steuerphase L. Somit wird das angeschlossene Leuchtmittel wieder auf den Ruhewert angesteuert, der einem wesentlich niedrigeren Niveau im Vergleich zu dem Betriebssollwert entspricht.

Wie gesagt, sowohl der Ruhewert wie auch der Betriebssollwert bei Erkennung einer Bewegung können an dem EVG 2 einstellbar bzw. programmierbar sein.

Es kann weiterhin vorgesehen sein, dass neben dem Bewegungsmelder auch ein Zeitgeber (Timer) 6 vorgeschaltet ist, der Nutzungszeiträume vorgibt (beispielsweise morgens, abends, Dämmerung, etc.) in denen die Funktion des Bewegungsmelders aktiv geschaltet ist. Nur innerhalb des Nutzungszeitraums verbindet also der Timer die Steuerphase L mit dem Bewegungsmelder, so dass nur während des Nutzungszeitraums der Bewegungsmelder wiederum eine Verbindung zwischen dem Steuereingang D1 und der Steuerphase L herstellen kann.

Diese Nutzungszeiträume können indessen bspw. Auch in dem Betriebsgerät oder in dem Bewegungsmelder selbst eingestellt sein.

Die Einstellung der beiden Dimmpegel (Ruhewert, Betriebssollwert) kann über beispielsweise über eine Schnittstelle erfolgen. Dies kann im Betrieb, während der Installation, während der Fertigung etc. ausgeführt werden. Die Schnittstelle kann auch drahtlos ausgebildet sein.

Das EVG kann auch dazu ausgebildet sein, automatisch den Anschluß eines Bewegungsmelders zu erkennen. Dies ist beispielsweise dann vorteilhaft, wenn das EVG ein solches mit kontinuierlichem Dimmbereich bzw. quasi kontinuierlichem Dimmbereich von beispielsweise 1% bis 100% ist, das bei Erkennen des Anschlusses eines Bewegungsmelders an den Anschlüssen D1, D2 automatisch auf einen 2-Dimmlevel-Betrieb umschaltet.

Ein typischer Anwendungsfall ist also das Erkennen von Personen zu bestimmten Zeitdauern (Morgenstunden, Abendstunden) in einem Treppenhaus etc.

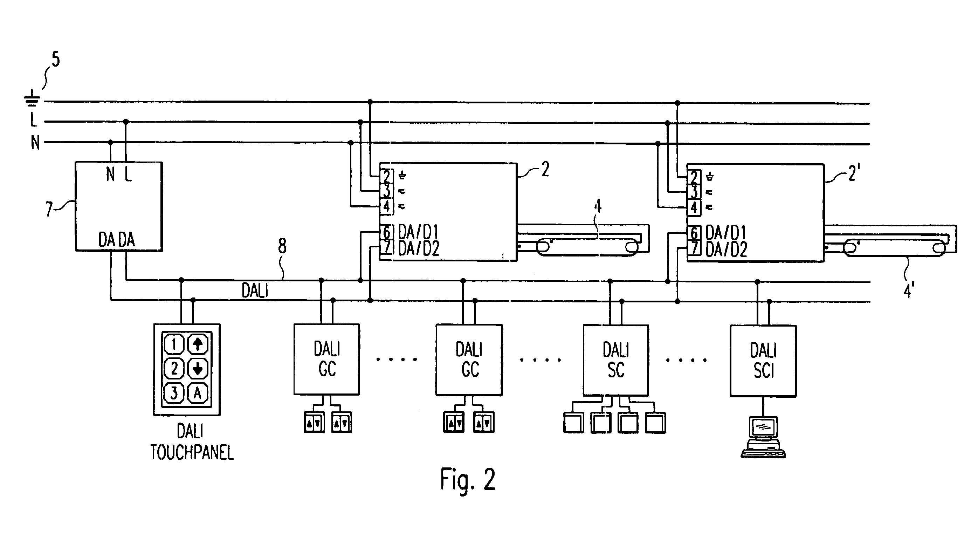

In Figur 2 ist dargestellt, dass ein Bewegungsmelder 7 auch Element eines digitalen Bussystems (bspw. Gemäss dem DALI-Standard) sein kann. In diesem Fall kann der Bewegungsmelder 7 angeschlossenen Betriebsgeräten 2, 2' über eine Busleitung 8 die Information der Erfassung einer Bewegung in Form eines Digitalsignals übermitteln. Diese Information kann, wie bspw. Bei dem DALI-Standard vorgesehen, adressiert sein und ein bzw. eine Gruppe von angeschlossenen Betriebsgeräten mit Leuchtmitteln 4, 4' mit der entsprechenden Adresse ansprechen.

Zusätzlich können natürlich auch bspw. Die im DALI-System üblichen digitalen Controller (DALI GC, DALI SC), Bedienelemente (DALI Touchpanel) und Schnittstellen (DALI SCI) angeschlossen sein. Über diese Schnittstellen kann bspw. Eine Programmierung der oben beschriebenen Pegel und Zeitdauern erfolgen.

Wie aus Figur 1 weiterhin ersichtlich, ist gemäß der vorliegenden Erfindung vorgesehen, dass das Betriebsgerät 2 zusätzlich und unabhängig zu dem Signal von dem Bewegungsmelder 1 auch den Zustand einer weiteren Schnittstelle, bspw. ein Ausgangssignal von einem Tageslichtsensor (Tageslichtmesskopf) 9 erfasst. Derartige Tageslichtsensoren sind grundsätzlich dem Fachmann gut bekannt.

Gemäß der vorliegenden Erfindung kann somit der Ruhepegel (Dimmpegel bei nicht erfasster Bewegung) und/oder der Aktivpegel (Pegel bei erfasster Bewegung) abhängig von dem Ausgangssignal des Tageslichtmesskopfs 9 gestaltet werden. Beispielsweise kann der Ruhepegel auf 0% oder ungleich 0% Dimmleistung abhängig vom Umgebungslicht gesetzt werden. Wenn also der Tageslichtsensor Licht oberhalb eines vorgegebenen Schwellenwertes erfasst, kann im Fall einer nicht vorliegenden erfassten Bewegung der Ruhepegel sogar auf Null gesetzt werden. Wenn dagegen das Tageslicht unterhalb des vorgegebenen Schwellenwertes liegt, kann der Ruhepegel wieder größer als 0% gewählt werden. Somit sind also beispielsweise drei Zustände möglich, nämlich 0%/Ruhepegel/Aktivpegel (bei Erfassung einer Bewegung).

Gemäß einem weiteren Aspekt kann abhängig von dem Ausgangssignal des Tageslichtsensors 9 auch der Aktivpegel (Dimmwert bei Erfassung von Bewegung) beeinflusst werden. Wenn beispielsweise tagsüber Umgebungslicht oberhalb eines Schwellenwertes vorliegt, kann dies durch den Tageslichtsensor erfasst werden und dann der Aktivpegel unterhalb des Pegels verringert werden, der bei geringerem Umgebungslicht eingestellt wird. Somit ergibt sich ein Energiespareffekt, da insbesondere bei häufiger Bewegung nicht quasi kontinuierlich auf volle Lichtleistung angesteuert wird, sondern nur auf den verringerten Aktivpegel.

Im Extremfall kann vorgesehen sein, dass bei ausreichendem Tageslicht auch bei erfasster Bewegung das Licht nicht eingeschaltet wird, der Aktivpegel also auf 0% Dimmwert gesetzt wird, und dies abhängig von dem Ausgangssignal des Tageslichtsensors.

Die Erfindung sorgt somit für eine Energieeinsparung dadurch, dass das Lichtniveau bei Anwesenheit (Aktivpegel) oder auch bei Abwesenheit von Bewegung (Passivpegel) tageslichtabhängig eingestellt wird. Das vorhandene Tageslicht wird also ausgewertet und bei der Einstellung des Aktivpegels und/oder des Passivpegels berücksichtigt.

Ein erfindungsgemässes Betriebsgerät für Leuchtmittel weist also vorzugsweise einen Eingang für Digitalsignale auf. Dieser Eingang kann auch für Tastersignale dienen, die diese Anschlüsse kurzschliessen (in diesem Fall werden die Anschlüsse intern versorgt) oder mit Netzspannung (d.h. einer Spannung mit einem Pegel, der deutlich höher ist als der Digitalsignalpegel) zu versorgen. Die Tastersignale können auch an einem von den Digitalsignalen unterschiedlichen Anschluss oder Anschlusspaar angelegt werden. Schliesslich ist auch ein Anschluss für einen Bewegungsmelder vorgesehen.

Gemäß einem weiteren Aspekt der Erfindung kann der Ruhepegel oder der Aktivpegel von einem eingehenden Signal oder dem Zustand eines an die Schnittstelle für den Tageslichtsensor angeschlossenen Bauteils abhängen. Der Ruhe- und/oder Aktivpegel kann also auch anders vorgegeben sein als durch einen Lichtsensor.

Das EVG 2 weist gemäss diesem Ausführungsbeispiel zum Überwachen des Tageslichtsensors 9 eine weitere Schnittstelle auf. Der Tageslichtsensor 9 kann ein passiver Helligkeitssensor sein, der derart in der Leuchte angebracht ist, dass nur das Umgebungslicht oder das Tageslicht gemessen wird. Der Tageslichtsensor 9 kann als passiver Helligkeitssensor beispielsweise durch einen LDR (lichtabhängiger Widerstand) ausgeführt sein. Je nach Änderung der Helligkeit ändert der LDR seinen Widerstand, diese Widerstandänderung wird von dem EVG2 ausgewertet. Der Tageslichtsensor 9 kann aber auch als aktiver Helligkeitssensor ausgeführt sein, beispielsweise kann dieser Sensor über die Sensorschnittstelle durch das EVG 2 mit Energie versorgt werden und die Helligkeitsinformationen über digitale Signale übertragen.

Die Schnittstelle für den Tageslichtsensor 9 kann aber auch mit einem extern zugeführten Signal oder aber einem angeschlossenen aktiven oder passiven elektronischen Bauteil belegt sein. Ein extern zugeführtes Signal kann beispielweise ein definierter (bspw. analoger) Pegel sein oder aber auch ein digital übertragenes Signal sein. Das angeschlossene elektronische Bauteil kann als aktives Bauteil ein Speicher IC oder auch eine Speicherkarte (Flash-Memory) sein, ein passives Bauteil kann beispielweise ein Widerstand oder Kondensator sein. Eine spezielle Variante ist ein lichtabhängiger Widerstand. Über die auf dem aktiven Bauteil abgelegten Daten oder aber auch den Wert des passiven Bauteiles kann dem EVG 2 eine Steuerinformation über die Schnittstelle für den Tageslichtsensor 9 zugeführt werden. Abhängig von dem extern zugeführten Signal oder dem angeschlossenen aktiven oder passiven elektronischen Bauteil kann ein Dimmpegel des EVG 2 bei einer Erfassung einer Bewegung angepasst werden, beispielsweise der Ruhepegel oder der Aktivpegel. Im EVG 2 können für die verschiedenen möglichen Eingangssignale oder anzuschließenden Bauteile an der Schnittstelle für den Tageslichtsensor 9 durch den Nutzer verschiedene Dimmpegel abgelegt werden, so dass je nach Konfiguration der Schnittstelle für den Tageslichtsensor 9 unterschiedliche Ruhepegel oder Aktivpegel abgespeichert sind.

Somit können als eine Art Szenenspeicher vom Nutzer verschiedene Verhaltensprofile im EVG 2 abgelegt werden und später ohne Eingriff in das EVG 2 einfach ausgewählt werden.

## Patentansprüche

1. Verfahren zur Ansteuerung von elektronisch gesteuerten Leuchtmittelbetriebsgeräten,
wobei das Verfahren die folgenden Schritte aufweist:
- Auswerten eines Ausgangssignals eines mit Netzspannung verbundenen Bewegungsmelders, der abhängig von der Erfassung einer Bewegung die Netzspannung als Ausgangssignal ausgibt, an einem Steuereingang des Betriebsgeräts,
- Auswerten an einer weiteren Schnittstelle des Leuchtmittelbetriebsgeräts, eines extern zugeführten Signals bspw. eines Ausgangssignals eines Lichtsensors, insbesondere eines Tageslichtmesskopfes oder der Belegung mit einem extern angeschlossenen aktiven oder passiven elektronischen Bauteil,
und
- Ansteuerung des elektronisch gesteuerten Leuchtmittelbetriebsgeräts auf einen von mehreren vorgegebenen Dimmpegeln abhängig von den Ausgangssignalen des Bewegungsmelders und der weiteren Schnittstelle.

2. Verfahren nach Anspruch 1,
wobei an dem Steuereingang des Betriebsgeräts wahlweise ein Digitalsignal oder ein von einer Versorgungsspannung, insbesondere einer Netzspannung herstammendes Signal angelegt werden kann.

3. Verfahren nach Anspruch 1 oder 2,
Verfahren zur Ansteuerung von elektronisch gesteuerten Leuchtmittelbetriebsgeräten ,
aufweisend die folgenden Schritte:
- Vorab-Programmierung von zwei unterschiedlichen Dimmpegel in dem Leuchtmittelbetriebsgerät.

4. Leuchtmittelbetriebsgerät,
aufweisend:
- einen Steuereingang, der sowohl für Signale von einem Bewegungsmelder wie auch von einem Taster ausgelegt ist, und
- einen davon unabhängigen Steuereingang bspw. für einen Tageslichtsensor,
wobei in dem Betriebsgerät ein Ruhewert und mindestens zwei unterschiedliche Dimmpegel abgelegt sind, die jeweils grösser als 0% sind und auf die ein angeschlossenes Leuchtmittel abhängig von einem an dem Steuereingang anliegenden Signal gesteuert und/oder geregelt wird.

5. Betriebsgerät nach Anspruch 4,
bei dem der Ruhepegel, also der Dimmpegel bei nicht erfasster Bewegung, von dem Ausgangssignal des Lichtsensors abhängt.

6. Betriebsgerät nach Anspruch 4 oder 5,
bei dem der Aktivpegel, also der Dimmpegel bei erfasster Bewegung, von dem Ausgangssignal des Lichtsensors abhängt.

7. Betriebsgerät nach Anspruch 4,
**dadurch gekennzeichnet,**
**dass** es derart ausgelegt ist, dass an den Steuereingang wahlweise ein digitales Signal mit einem ersten Spannungspegel oder ein von einer Netzspannung herstammendes Signal mit einem davon unterschiedlichen Pegel anlegbar ist und dass beide genannten Signalarten von dem Betriebsgerät zur Ansteuerung eines angeschlossenen Leuchtmittels umsetzbar sind.

8. Betriebsgerät nach Anspruch 4 oder 7,
**dadurch gekennzeichnet,**
**dass** es eine Betriebsgerät mit mehr als zwei Dimmpegeln ist, das bei Anschliessen eines Bewegungsmelders auf einen Betrieb mit zwei definierten Dimmpegeln umschaltet.

9. System zur Ansteuerung von elektronisch gesteuerten Leuchtmittelbetriebsgeräten,
aufweisend ein Leuchtmittelbetriebsgerät nach einem der Ansprüche 4 bis 8 und einen mit Netzspannung verbundenen Bewegungsmelder, der mit einem Steuereingang des Leuchtmittelbetriebsgeräts verbunden ist, derart dass ein angeschlossenes Leuchtmittel als Antwort auf eine durch den Bewegungsmelder erfasste Bewegung auf eine höhere Lichtleistung angesteuert wird.

10. System nach Anspruch 9,
wobei der Steuereingang derart ausgebildet ist, dass sowohl ein Digitalsignal wie auch ein Netzspannungssignal anlegbar ist.

11. System zur Ansteuerung von Leuchtmitteln,
aufweisend:
- einen Bewegungsmelder zur Erfassung einer Bewegung in einem definierten Raum,
- eine weitere Schnittstelle bspw. für einen Tageslichtsensor, und
- ein damit verbundenes Leuchtmittelbetriebsgerät, das nach einem der Ansprüche 4 bis 8 ausgebildet ist und das bei Erfassung einer Bewegung durch den Bewegungsmelder ein angeschlossenes Leuchtmittel auf einen von einem Ruhewert verschiedenen Betriebssollwert ansteuert, der eine in Vergleich zum Ruhewert vergrösserte Lichtleistung der angeschlossenen Leuchtmittel angibt,
wobei der Ruhewert und/oder der Betriebssollwert von dem Zustand der weiteren Schnittstelle abhängt.

12. System nach Anspruch 11,
wobei der Betriebssollwert während einer definierten Zeitdauer beibehalten wird, bevor wieder der Ruhewert angesteuert wird.

13. System nach Anspruch 12,
**dadurch gekennzeichnet,**
**dass** die definierte Zeitdauer der Beibehaltung des Betriebssollwerts einstellbar und/oder programmierbar ist.

14. System nach einem der Ansprüche 11 bis 13,
wobei der Ruhewert und/oder der Betriebssollwert einstellbar sind.

## Claims

1. Method for driving electronically controlled operating devices for light-emitting means,
the method having the following steps:
- evaluating an output signal of a motion sensor, which is connected to the system voltage and outputs the system voltage as output signal depending on the detection of a motion, at a control input of the operating device,
- evaluating an externally supplied signal, for example an output signal from a light sensor, in particular a daylight measuring head, or the provision of an externally connected active or passive electronic component, at a further interface of the operating device for light-emitting means,
and
- setting the electronically controlled operating device for light-emitting means to one of a plurality of predetermined dimming levels depending on the output signals from the motion sensor and the further interface.

2. Method according to Claim 1,
wherein optionally a digital signal or a signal originating from a supply voltage, in particular a system voltage, can be applied to the control input of the operating device.

3. Method according to Claim 1 or 2,
having the following steps:
- preprogramming two different dimming levels in the operating device for light-emitting means.

4. Operating device for light-emitting means,
having:
- a control input, which is designed for signals both from a motion sensor and from a pushbutton, and
- a control input which is independent thereof for a daylight sensor, for example, wherein a quiescent value and at least two different dimming levels are stored in the operating device, said quiescent value and dimming levels each being greater than 0%, and a connected light-emitting means being controlled and/or regulated to said quiescent value and dimming levels depending on a signal applied to the control input.

5. Operating device according to Claim 4,
in which the quiescent level, i.e. the dimming level when no motion is detected, is dependent on the output signal from the light sensor.

6. Operating device according to Claim 4 or 5,
in which the active level, i.e. the dimming level when motion is detected, is dependent on the output signal from the light sensor.

7. Operating device according to Claim 4,
**characterized**
**in that** it is designed in such a way that optionally a digital signal with a first voltage level or a signal originating from a system voltage with a level which is different from said first voltage level can be applied to the control input, and in that both of said types of signal can be converted by the operating device for driving a connected light-emitting means.

8. Operating device according to Claim 4 or 7,
**characterized**
**in that** it is an operating device with more than two dimming levels which, when a motion sensor is connected, switches over to an operating mode with two defined dimming levels.

9. System for driving electronically controlled operating devices for light-emitting means,
having an operating device for light-emitting means according to one of Claims 4 to 8 and a motion sensor, which is connected to the system voltage and is connected to a control input of the operating device for light-emitting means in such a way that a connected light-emitting means is set to a relatively high luminous efficacy in response to a motion detected by the motion sensor.

10. System according to Claim 9,
wherein the control input is designed in such a way that both a digital signal and a system voltage signal can be applied.

11. System for driving light-emitting means,
having:
- a motion sensor for detecting a motion in a defined space,
- a further interface, for example for a daylight sensor, and
- an operating device for light-emitting means, which is connected thereto, is designed according to one of Claims 4 to 8 and, in the event of detection of a motion by the motion sensor, sets a connected light-emitting means to an operation setpoint value which is different from a quiescent value and which indicates an increased luminous efficacy of the connected light-emitting means in comparison with the quiescent value,
wherein the quiescent value and/or the operation setpoint value is/are dependent on the state of the further interface.

12. System according to Claim 11,
wherein the operation setpoint value is maintained during a defined period of time before the quiescent value is set again.

13. System according to Claim 12,
**characterized**
**in that** the defined period of time for which the operation setpoint value is maintained can be adjusted and/or programmed.

14. System according to one of Claims 11 to 13,
wherein the quiescent value and/or the operation setpoint value can be adjusted.

## Revendications

1. Procédé pour commander des appareils d'alimentation pour moyens d'éclairage, les appareils d'alimentation étant à commande électronique,
le procédé comprenant les étapes suivantes :
- évaluation d'un signal de sortie d'un détecteur de mouvement relié à une tension de réseau, lequel détecteur délivre, à une entrée de commande de l'appareil d'alimentation, la tension de réseau comme signal de sortie en fonction de la détection d'un mouvement,
- évaluation, à une autre interface de l'appareil d'alimentation pour moyens d'éclairage, d'un signal fourni de manière externe ou d'un signal de sortie d'un capteur de lumière, en particulier d'une tête de capteur de lumière du jour ou de la disposition avec un composant électronique actif ou passif relié de manière externe, et
- commande de l'appareil d'alimentation pour moyens d'éclairage à commande électronique à un niveau de gradation parmi plusieurs niveaux de gradation prédéterminés en fonction des signaux de sortie du détecteur de mouvement et de l'autre interface.

2. Procédé selon la revendication 1,
dans lequel au choix un signal numérique ou un signal provenant d'une tension d'alimentation, notamment d'une tension de réseau, peut être appliqué à l'entrée de commande de l'appareil d'alimentation.

3. Procédé selon la revendication 1 ou 2,
procédé pour commander des appareils d'alimentation pour moyens d'éclairage à commande électronique,
présentant les étapes suivantes :
- - pré-programmation de deux niveaux de gradation différents dans un appareil d'alimentation pour moyens d'éclairage.

4. Appareil d'alimentation pour moyens d'éclairage,
présentant :
- une entrée de commande, qui est conçue tant pour des signaux d'un détecteur de mouvement que pour des signaux d'un bouton poussoir, et
- une entrée de commande indépendante de celle-ci pour par exemple un capteur de lumière du jour,
dans lequel dans l'appareil d'alimentation sont sauvegardés une valeur de repos et au moins deux niveaux de gradation différents, qui chacun sont supérieurs à 0% et sur lesquels est commandé et/ou asservi un moyen d'éclairage relié en fonction d'un signal appliqué à l'entrée de commande.

5. Appareil d'alimentation selon la revendication 4,
dans lequel le niveau de repos, c'est à dire le niveau de gradation en cas de non détection de mouvement, dépend du signal de sortie du capteur de lumière.

6. Appareil d'alimentation selon la revendication 4 ou 5,
dans lequel le niveau actif, c'est à dire le niveau de gradation en cas de détection de mouvement, dépend du signal de sortie du capteur de lumière.

7. Appareil d'alimentation selon la revendication 4,
**caractérisé en ce**
**qu'**il est conçu de manière à ce que au choix un signal numérique avec un premier niveau de tension ou un signal provenant d'une tension de réseau avec un deuxième niveau de tension différent est applicable à l'entrée de commande, et en ce que les deux types de signaux nommés peuvent être mis en oeuvre par l'appareil d'alimentation pour la commande d'un moyen d'éclairage relié.

8. Appareil d'alimentation selon la revendication 4 ou 7,
**caractérisé en ce qu'**il s'agit d'un appareil d'alimentation avec plus de deux niveaux de gradation, qui bascule sur un fonctionnement avec deux niveaux définis de gradation au moment de la connexion d'un détecteur de mouvement.

9. Système pour la commande d'appareils d'alimentation pour moyens d'éclairage, les appareils d'alimentation étant à commande électronique,
présentant un appareil d'alimentation pour moyens d'éclairage selon l'une des revendications 4 à 8, et un détecteur de mouvement relié à une tension de réseau, le détecteur de mouvement étant relié à une entrée de commande de l'appareil d'alimentation pour moyens d'éclairage de manière à ce que un moyen d'éclairage relié est commandé sur une puissance lumineuse supérieure en réponse à un mouvement détecté par le détecteur de mouvement.

10. Système selon la revendication 9,
dans lequel l'entrée de commande est conçu de sorte que tant un signal numérique qu'un signal de tension de réseau est applicable.

11. Système pour la commande de moyens d'éclairage,
présentant :
- un détecteur de mouvement pour la détection d'un mouvement dans un espace défini,
- une autre interface par exemple pour un capteur de lumière du jour, et
- un appareil d'alimentation pour moyens d'éclairage relié avec ceux-ci, lequel appareil d'alimentation est configuré selon l'une des revendications 4 à 8 et, en cas de détection d'un mouvement par le détecteur de mouvement, commande un moyen d'éclairage relié sur une valeur de consigne de fonctionnement différente d'une valeur de repos, la valeur de consigne indiquant une puissance lumineuse du moyen d'éclairage relié qui est augmentée par rapport à la valeur de repos,
dans lequel la valeur de repos et/ou la valeur de consigne de fonctionnement dépend de l'état de l'autre interface.

12. Système selon la revendication 11,
dans lequel la valeur de consigne de fonctionnement est maintenue pendant une période de temps définie, avant de commander à nouveau avec la valeur de repos.

13. Système selon la revendication 12,
**caractérisé en ce que**
la période de temps définie du maintien de la valeur de consigne de fonctionnement est ajustable et/ou programmable.

14. Système selon l'une des revendications 11 à 13,
dans lequel la valeur de repos et / ou la valeur de consigne de fonctionnement est ajustable.
